# EUROPÄISCHE PATENTSCHRIFT

(11) **EP 1 040 919 B1**
(45) Veröffentlichungstag und Bekanntmachung des Hinweises auf die Patenterteilung: **04.09.2002**
(21) Anmeldenummer: 00104331.4
(22) Anmeldetag: 02.03.2000
(51) Int. Cl.: B41F 13/64, B65H 39/10

(54) **Signatursammelvorrichtung**
Signature collecting device
Dispositif collecteur pour signatures

(30) Priorität: 29.03.1999 US 277789
(43) Veröffentlichungstag der Anmeldung: 04.10.2000
(73) Patentinhaber: Heidelberger Druckmaschinen Aktiengesellschaft, 69115 Heidelberg (DE)
(72) Erfinder: Cote, Kevin Lauren, Durham, NH 03824 (US); Hearn, Michael Lee, Dover, NH 03820 (US); Ketchum, John Lee, Old Orchard Beach, ME 04064 (US)
(74) Vertreter: Duschl, Edgar Johannes, Dr.

(56) Entgegenhaltungen:
- EP-A- 0 169 489
- EP-A- 0 210 633
- DE-A- 3 527 710
- DE-C- 662 478
- DE-C- 721 761
- US-A- 4 354 671
- US-A- 4 746 107

## Beschreibung

Die vorliegende Erfindung betrifft eine Rollendruckmaschine mit Schneidzylindern zum Schneiden der Bahn zu Signaturen, mit einem Übergabezylinder zur Aufnahme der Signaturen, und mit einer Signatursammelvorrichtung zum Sammeln der Signaturen bevor diese zum Übergabezylinder gelangen.

In einer Rollendruckmaschine kann ein Druckzylinder eine Vielzahl von Bildern in Umfangsrichtung drucken. Wenn Signaturen mit diesen Bildern von der Bahn abgeschnitten und in einem Falzprozess gesammelt werden sollen, ist ein Sammelzylinder erforderlich. Der Sammelzylinder ergreift eine geschnittene Signatur und transportiert diese um den ganzen Zylinder herum, so daß diese mit einer Signatur kombiniert werden kann, die ein Bild von einem anderen Abschnitt des Druckzylinders enthält. Dieser Vorgang wird fortgesetzt, bis alle Signaturen gesammelt sind; dann werden die gesammelten Signaturen in einem folgenden Arbeitsvorgang vom Sammelzylinder gewöhnlich auf einen Falzklappenzylinder übertragen. Derartige Vorrichtungen sind beispielsweise aus der US 4,746,107 und DE 35 27 710 A1 bekannt.

Das Problem bei diesem Konzept ist, daß die Größe des Sammelzylinders von der Anzahl der zu sammelnden Signaturen bestimmt ist. Wenn der Druckzylinder zwei Druckbilder in Umfangsrichtung druckt, die dann zwei verschiedene Signaturen ergeben, kann der Sammelzylinder nicht mit einer geradzahligen Anzahl von Greifelementen ausgerüstet sein. Wenn der Druckzylinder drei Bilder in Umfangsrichtung druckt, die drei Signaturen ergeben, dann kann der Sammelzylinder nicht mit drei, sechs, neun oder einem Vielfachen von drei Greiferelementen auf seinem Umfang ausgerüstet sein. Diese Verquickung der gewünschten Anzahl zu sammelnder Signaturen mit der Anzahl der Greifelemente an dem Sammelzylinder macht es zwangsläufig erforderlich, den Sammelzylinder sehr groß und somit kostspielig zu konstruieren, um die von ein und dem selben Zylinder kommenden verschiedenen Signaturen aufzunehmen.

Ein weiteres Problem bei dem jetzigen Konzept besteht darin, daß die Signaturen separat und voneinander beabstandet auf dem Sammelzylinder verbleiben müssen, so daß ein Greifer die Vorderkanten aller Signaturen, die für ein Signaturbündel gesammelt werden, ergreifen kann. Dieses Erfordernis erlaubt es nicht, daß die Signaturen während ihres Transports mit dem Sammelzylinder verlangsamt werden, da die Signaturen einander überlappen würden.

In der EP 0 210 633 A2 ist ein Falzapparat mit einer Sammelvorrichtung, welche nacheinander ankommende Druckexemplare zusammenlegt, vor dem dritten Falz für eine Rollendruckmaschine offenbart. In einer Ausführungsform weist die Sammelvorrichtung eine aus Bändern bestehende Umwegleitung auf. Druckexemplare können, ausgehend von einer Bandleitung, mit Hilfe einer steuerbaren Zunge dem Eingang der Umwegleitung zugeführt werden. Nach einer durch die Weglänge der Umwegleitung bestimmten Zeit gelangen die umgeleiteten Druckexemplare über den Ausgang der Umwegleitung auf die Bandleitung und somit kantengenau auf ein nichtumgeleitetes Druckexemplar.

Aus der DE 662 478 C ist ein Ableger mit einer umlaufenden Sammelvorrichtung bekannt, welcher von einem Querschneider zugeführte Bogen sammelt und aufstapelt. Von einer Hauptförderbahn an einer Eintrittstelle abzweigend und auf diese an einer Einmündungsstelle, welche vor der Eintrittstelle liegt, wieder einmündend, weist der Ableger eine Umführungsbahn mit verstellbarer Länge auf. Ein abgetrennter Bogen beziehungsweise ein Paket abgetrennter Bogen durchläuft die Umführungsbahn, wobei mit jeder absolvierten Runde ein zusätzlicher Bogen aufsammelt wird, bis zur Erreichung der zu sammelnden Anzahl abgetrennter Bogen in diesem Paket. Dann verschließt eine Steuerklappe die Umführungsbahn, und das gebildete Paket aufeinanderliegender Bogen läuft in der Hauptförderrichtung weiter.

Es ist Aufgabe der vorliegenden Erfindung, eine Rollendruckmaschine mit einer Signatursammelvorrichtung zu schaffen, mit welcher die vorstehend erwähnten Nachteile der bekannten Vorrichtungen mit Sammelzylindern überwunden und die Signaturen gesammelt werden können, bevor diese zu einem Übergabezylinder gelangen.

Diese Aufgabe wird durch eine Rollendruckmaschine mit den Merkmalen gemäß Anspruch 1 gelöst.

Erfindungsgemäß sind entsprechend mehrere Pfade vorgesehen, die von den Schneidzylindern zum Übergabezylinder führen. Die Länge und die Anzahl dieser Pfade werden von der gewünschten Anzahl von Signaturen bestimmt, die für ein Signaturbündel gesammelt werden sollen.

Wenn der Druckzylinder z. B. zwei Bilder in Umfangsrichtung druckt, die zwei Signaturen ergeben, dann werden zwei verschiedene Pfade von den Schneidzylindern zum Sammelzylinder vorgesehen, nämlich Pfad "A" und Pfad "B". Wenn die Länge von Pfad "A" X beträgt, dann würde die Länge von Pfad "B" (X + P) oder (X + ein Vielfaches von P) betragen, wobei P der Abstand der Signaturen voneinander ist, in welchem diese die Schneidzylinder verlassen. In diesem Fall wird die erste Signatur in einen langen Pfad und die nächste Signatur in einen kurzen Pfad geleitet werden und jeweils diesem folgen. Nach dem Durchlauf durch die Pfade werden die Signaturen in den als Pfad "A" und Pfad "B" bezeichneten Pfaden vor dem Übergabezylinder übereinander zusammengeführt werden.

Mit dieser Lösung kann die Transport- und Verarbeitungsgeschwindigkeit der Signatur reduziert werden. Nachdem die Signaturen in separate Pfade geleitet wurden, ist deren Abstand voneinander so groß, daß die Signaturen auf eine niedrigere Geschwindigkeit abgebremst werden können. In dem einfachen Fall von zwei Pfaden, kann z. B. die Geschwindigkeit der Signaturen auf die Hälfte reduziert werden, wenn diese die Schneidzylinder verlassen. Der Übergabezylinder kann sich dann mit der Hälfte der Winkelgeschwindigkeit drehen, mit welcher sich dieser ohne die Aufteilung in zwei Pfade hätte drehen müssen. Durch diese bedeutende Geschwindigkeitsreduzierung wird die Qualität der Signaturverarbeitungsfunktionen, z. B. des Falzens, verbessert.

Gemäß einer weiteren Ausführungsform der Erfindung besitzt mindestens einer der Pfade Bänder, die eine durch Federn vorgespannte Bandwalze zum Straffen des Bandes aufweist. Auf diese Weise wird während einer Änderung der Pfadlänge die entsprechende Bandspannung aufrechterhalten.

In einer weiteren Ausführungsform der Erfindung sind eine Bandwalze, die einen der Bandpfade kontaktiert, ein Schwenkarm zum Schwenken der Bandwalze um eine Drehachse, und ein Betätigungsorgan zum Schwenken der Bandwalze bei einer Änderung der Länge des Bandpfades vorgesehen. Die Änderung der Pfadlänge kann auf diese Art und Weise einfach erzielt werden.

In einer weiteren Ausführungsform der Erfindung sind mindestens drei Bandpfade vorgesehen, in denen jeweilige erste, zweite und dritte Signaturen transportiert werden. Weiterhin sind zwei Sammelstellen vorgesehen, wobei an der einen der Sammelstellen die ersten und zweiten Signaturen übereinander gesammelt werden und an der anderen der Sammelstellen die ersten, zweiten und dritten Signaturen übereinander gesammelt werden. Somit ist es möglich, drei von dem Druckzylinder gedruckte Signaturen übereinander anzuordnen.

Gemäß einer weiteren Ausgestaltung der Erfindung ist in mindestens einem der Bandpfade eine Abbremsvorrichtung angeordnet, um die Signaturen im Bandpfad zu verlangsamen. Diese Geschwindigkeitsreduzierung verbessert die Qualität bei der Durchführung der Signaturverarbeitungsfunktionen, wie z. B. des Falzens.

In einer zusätzlichen Ausführungsform der Erfindung sind vier Bandpfade vorgesehen, in welchen die jeweils ersten, zweiten und dritten Signaturen transportiert werden, und die Ablenkstation besteht aus einer ersten und einer zweiten Ablenkstation, wobei an der ersten Ablenkstation die erste und die zweite Signatur in einen der Bandpfade und die dritte Signatur in einen anderen der Bandpfade geleitet wird, und an der zweiten Ablenkstation die erste und die zweite Signatur in unterschiedliche Bandpfade geleitet wird. In diesem Fall werden die Signaturen zweimal abgelenkt.

Die vorliegende Erfindung wird in der folgenden Beschreibung bevorzugter Ausführungsbeispiele in Verbindung mit den beigefügten, nachstehend aufgeführten Zeichnungen näher erläutert.

Es zeigen:
- Fig. 1: eine schematische Seitenansicht einer ersten Ausführungsform der erfindungsgemäßen Signatursammelvorrichtung mit zwei Bandpfaden;
- Fig. 2: eine vergrößerte Darstellung der Signatursammelvorrichtung gemäß Fig. 1;
- Fig. 3: eine Seitenansicht einer zweiten Ausführungsform der Signatursammelvorrichtung mit drei Bandpfaden;
- Fig. 4: eine Seitenansicht einer dritten Ausführungsform der Signatursammelvorrichtung mit vier Bandpfaden und zwei Ablenkstationen; und
- Fig. 5: eine Seitenansicht der Signatursammelvorrichtung mit einer Abbremsvorrichtung;

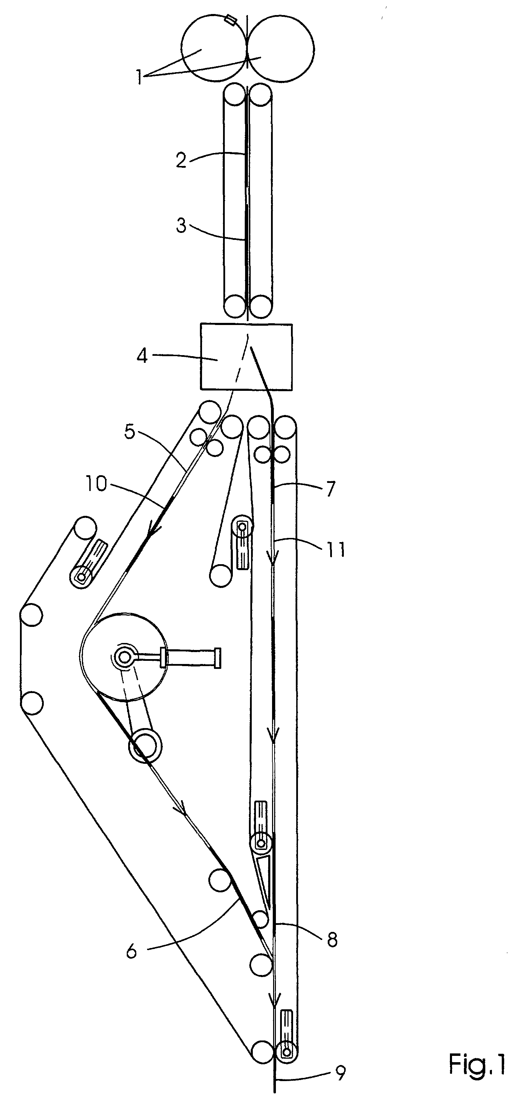

Fig. 1 zeigt Signaturen 2 und 3, die die Schneidzylinder 1 verlassen und an Transportbändern entlang zu einer Ablenkstation 4 transportiert werden. Des weiteren zeigt Fig. 1 eine Signatur 10, die sich unterhalb der Ablenkstation 4 in einem ersten Bandpfad 5 befindet, und eine Signatur 7, die sich unterhalb der Ablenkstation 4 in einem zweiten Bandpfad 11 befindet. Der erste Bandpfad 5 ist länger als der zweite Bandpfad 11, so daß eine Signatur 6, die den ersten Bandpfad 5 verläßt, auf eine den zweiten Bandpfad 11 verlassende Signatur 8 ausgerichtet wird. Die beiden übereinander angeordneten Signaturen 6 und 8, die mit dem Bezugszeichen 9 gekennzeichnet sind, werden übereinander zu einem Übergabezylinder T transportiert.

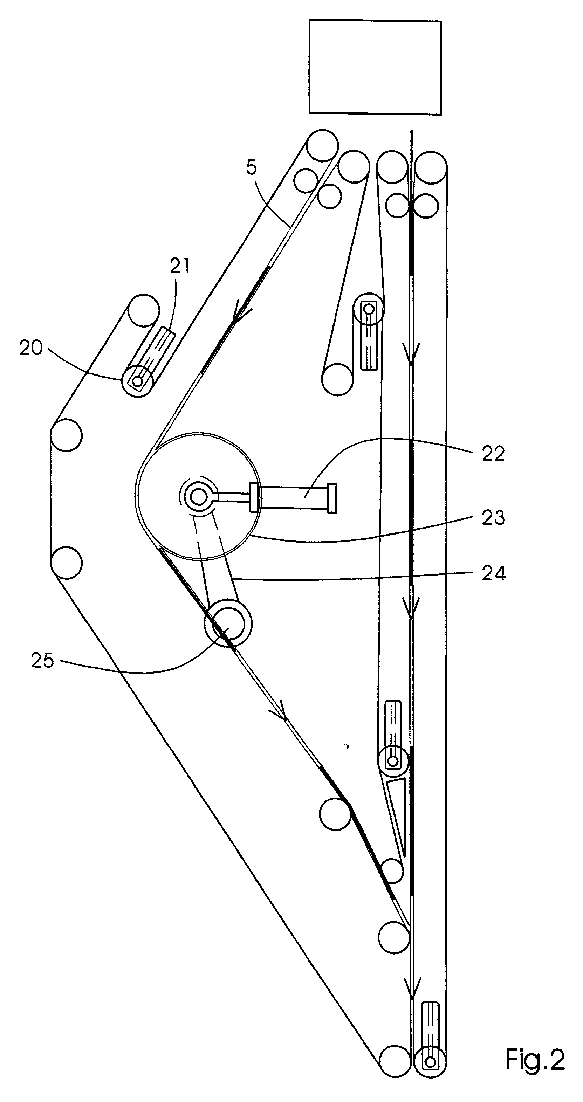

Fig. 2 ist eine vergrößerte Darstellung der beiden in Fig. 1 gezeigten Bandpfade. Die Länge des ersten Bandpfades 5 kann so gestaltet sein, daß Signaturen mit variablen Längen gefördert werden können oder die Signaturen in dem ersten Bandpfad relativ zu den Signaturen in dem zweiten Bandpfad in die gewünschte Phase zueinander gebracht werden können. Die Pfadlänge kann durch Steuerung eines Betätigungsorgans 22 geändert werden. Das Betätigungsorgan 22 schiebt oder zieht an einem Schwenkarm 24, wodurch dieser um eine Drehachse 25 geschwenkt wird. Aufgrund dieser vom Betätigungsorgan 22 veranlaßten Bewegung wird eine Bandwalze 23 bewegt und eine Änderung des Pfades, dem die Signatur folgen muß, bewirkt. Die Bandwalzen 20 können durch Federn 21 vorgespannt sein, so daß während einer Änderung der Bandlänge die entsprechende Bandspannung beibehalten werden kann.

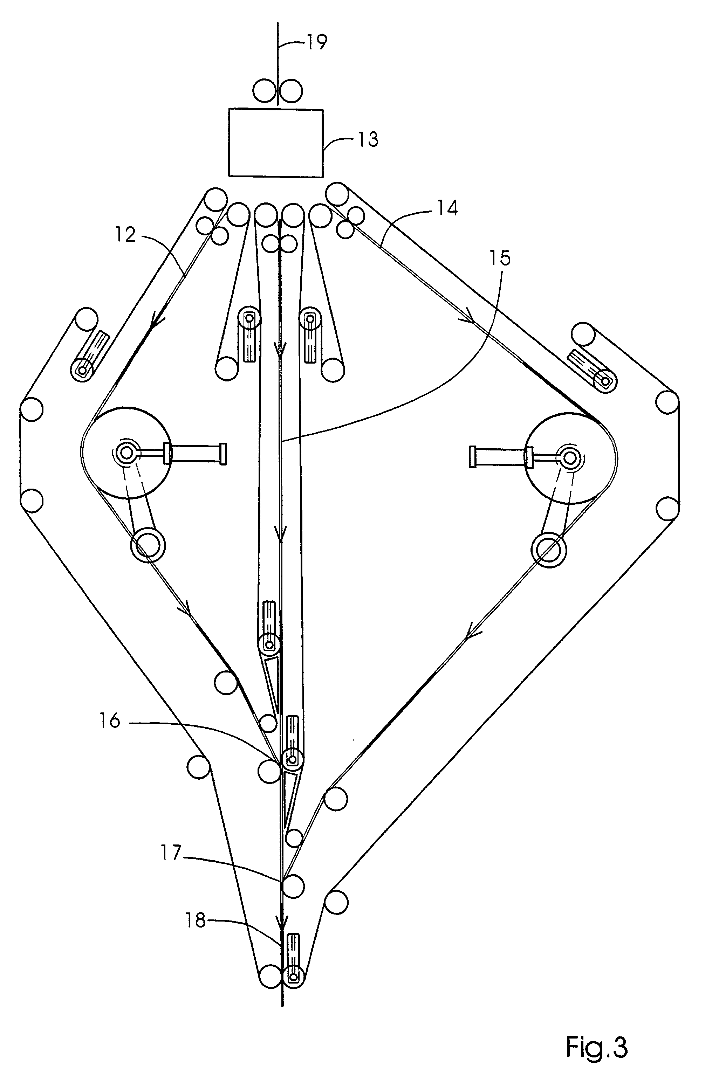

Fig. 3 zeigt eine Ausführungsform, in welcher drei Pfade von den Schneidzylindern zum Übergabezylinder T führen. In diesem Fall können an einer Ablenkstation 13 die ankommenden Signaturen 19 in einen von drei möglichen Pfaden 12, 14 oder 15 geleitet werden. Die erste Signatur wird in den längsten Pfad 14 geleitet, die zweite Signatur wird in den mittellangen Pfad 12 geleitet und die dritte Signatur wird in den kürzesten Pfad 15 geleitet. Die Pfadlängen sind derart aufeinander abgestimmt, daß die zweite Signatur und die dritte Signatur gleichzeitig an einem gemeinsamen Punkt 16 ankommen und sich dann zusammen fortbewegen. Die erste Signatur trifft an einem anderen gemeinsamen Punkt 17 auf diese beiden Signaturen. Die drei Signaturen 18 werden dann in einer gesammelten Konfiguration zum Übergabezylinder T transportiert.

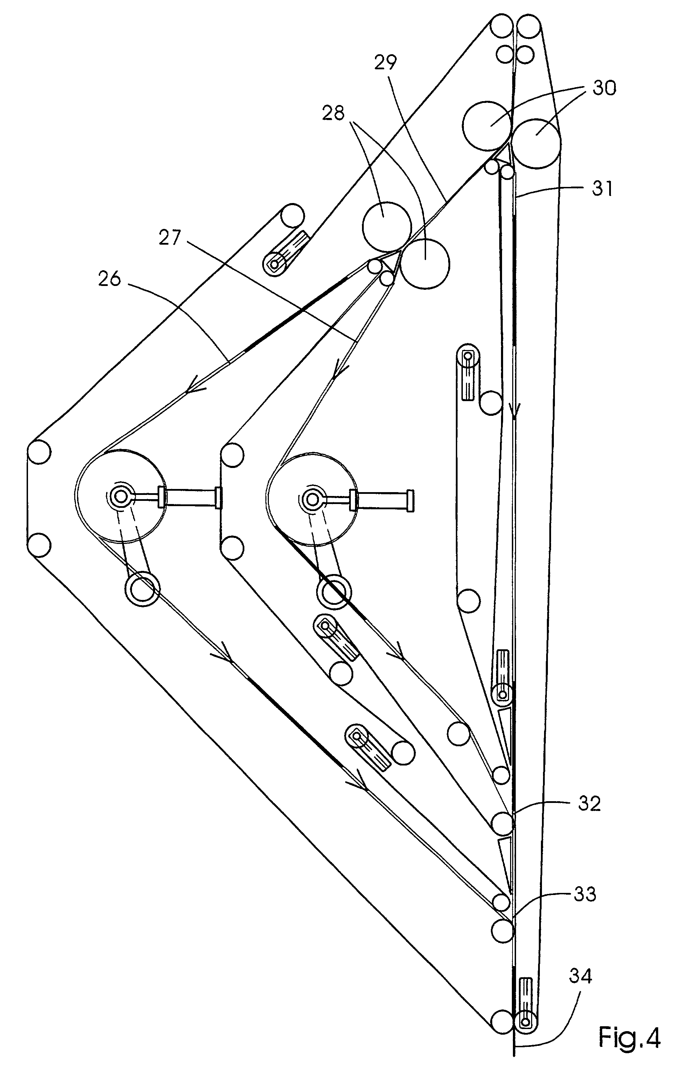

Fig. 4 zeigt eine Ausführungsform, in welcher die Signaturen in vier verschiedene Pfade geleitet werden Die erste und die zweite Signatur werden an einer ersten Ablenkstation 30 in einen Pfad 29 geleitet und die dritte Signatur wird in einen Pfad 31 geleitet. Die erste und die zweite Signatur werden an einer zweiten Ablenkstation 28 nochmals aufgeteilt, und zwar wird die erste Signatur in einen Pfad 26 und die zweite Signatur in einen Pfad 27 geleitet. Die zweite und die dritte Signatur werden an einem Punkt 32 übereinander liegend gesammelt. Die erste Signatur wird zusammen mit den vorher gesammelten zweiten und dritten Signaturen an einem Punkt 33 gesammelt. Die drei Signaturen 34 verlassen den Punkt 33 in einer gesammelten Konfiguration.

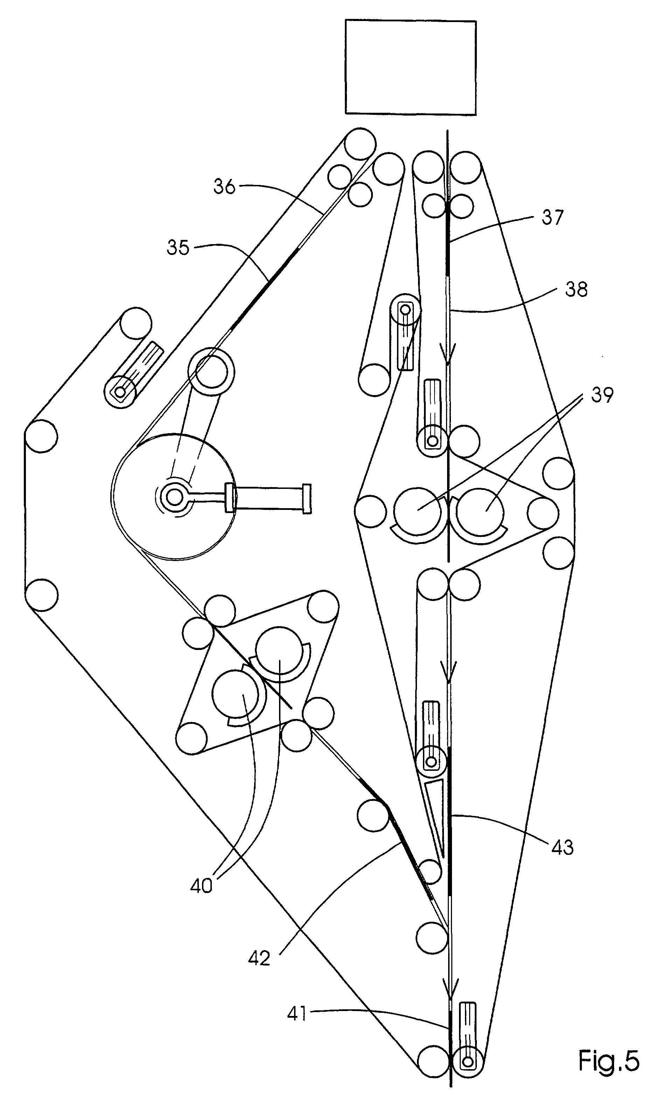

Fig. 5 stellt das Konzept der Reduzierung der Geschwindigkeit der Signaturen dar, nachdem diese in verschiedene Pfade aufgeteilt wurden. Eine Abbremsvorrichtung 39 reduziert die Geschwindigkeit von den Signaturen, die in einem Pfad 38 transportiert werden, so, daß sich eine Signatur 43 im Pfad 38 vor der Abbremseinrichtung 39 mit einer niedrigeren Geschwindigkeit als eine Signatur 37 im Pfad 36 nach der Abbremseinrichtung 39 bewegt. Gleichermaßen reduziert eine Abbremsvorrichtung 40 die Geschwindigkeit von Signaturen im Pfad 36 derart, daß sich eine Signatur 42 nach dem Passieren der Abbremsvorrichtung 40 mit einer niedrigeren Geschwindigkeit als eine Signatur 35 vor der Abbremseinrichtung bewegt. Nachdem die Signaturen in beiden Pfaden verlangsamt wurden, werden sie an einem Punkt 41 gesammelt und mit reduzierter Geschwindigkeit zum Übergabezylinder T transportiert.

### LISTE DER BEZUGSZEICHEN

- 1: Schneidzylinder
- 2: Signatur
- 3: Signatur
- 4: Ablenkstation
- 5: Bandpfad
- 6: Signatur
- 7: Signatur
- 8: Signatur
- 9: Signaturen (Signatur 6 und Signatur 8)
- 10: Signatur
- 11: Bandpfad
- 12: Pfad der zweiten Signatur 19
- 13: Ablenkstation
- 14: Pfad der ersten Signatur 19
- 15: Pfad der dritten Signatur 19
- 16: gemeinsamer Punkt der Signaturen
- 17: gemeinsamer Punkt der Signaturen
- 18: drei Signaturen
- 19: Signaturen
- 20: Bandwalzen
- 21: Federn
- 22: Betätigungsorgan
- 23: Bandwalze
- 24: Schwenkarm
- 25: Drehachse
- 26: Pfad der ersten Signatur
- 27: Pfad der zweiten Signatur
- 28: zweite Ablenkstation
- 29: Pfad der ersten und zweiten Signatur
- 30: erste Ablenkstation
- 31: Pfad der dritten Signatur
- 32: Sammelpunkt der zweiten und dritten Signatur
- 33: Sammelpunkt der ersten, zweiten und dritten Signatur
- 34: drei Signaturen
- 35: Signatur
- 36: Pfad der Signatur 42
- 37: Signatur
- 38: Pfad der Signatur 43
- 39: Abbremsvorrichtung
- 40: Abbremsvorrichtung
- 41: Sammelpunkt der Signaturen
- 42: Signatur
- 43: Signatur

## Patentansprüche

1. Rollendruckmaschine mit Schneidzylindern (1) zum Schneiden der Bahn zu Signaturen (6, 7, 8), mit einem Übergabezylinder zur Aufnahme der Signaturen, und mit einer Signatursammelvorrichtung zum Sammeln der Signaturen bevor diese zum Übergabezylinder gelangen,
**dadurch gekennzeichnet,**
**daß** die Signatursammelvorrichtung die folgenden Merkmale umfaßt:
eine Ablenkstation (4), an der die von den Schneidzylindern kommenden Signaturen (2, 3) abgelenkt werden können;
mindestens zwei der Ablenkstation (4) nachgeordnete Bandpfade (5, 11) von jeweils unterschiedlicher Länge, in denen die von der Ablenkstation (4) kommenden Signaturen (6, 8) aufgenommen werden können; und
mindestens einen zwischen Ablenkstation (4) und Übergabezylinder liegenden Sammelpunkt, an dem die von den verschiedenen Bandpfaden (5, 11) kommenden Signaturen (9) gesammelt und übereinander angeordnet dem Übergabezylinder zugeführt werden können.

2. Rollendruckmaschine nach Anspruch 1,
**dadurch gekennzeichnet,**
**daß** mindestens einer der Bandpfade (5, 11) eine mit einer Feder (21) vorgespannte Bandwalze (20) zum Straffen des Bandpfades aufweist.

3. Rollendruckmaschine nach Anspruch 1,
**dadurch gekennzeichnet,**
**daß** diese ferner umfaßt: eine Bandwalze (23), die einen der Bandpfade (5, 11) kontaktiert; einen Schwenkarm (24), der die Bandwalze (23) um eine Drehachse (25) schwenkt; und ein Betätigungsorgan (22), durch das die Bandwalze (23) geschwenkt wird, um die Länge des Bandpfades zu ändern.

4. Rollendruckmaschine nach Anspruch 1,
**dadurch gekennzeichnet,**
**daß** drei Bandpfade (14, 12, 15) vorgesehen sind, in welchen die jeweils eine Signatur transportiert werden kann, und daß zwei Sammelpunkte (16, 17) vorgesehen sind, wobei an einem der Sammelpunkte (16, 17) zwei der drei Signaturen übereinander angeordnet gesammelt werden und an dem anderen der Sammelpunkte die dritte Signatur über die beiden anderen angeordnet gesammelt werden kann.

5. Rollendruckmaschine nach Anspruch 1,
**dadurch gekennzeichnet,**
**daß** jeder der Bandpfade (36, 38) eine Abbremsvorrichtung (40, 39) aufweist, durch welche die Signaturen (34,35) in dem Bandpfad (36, 38) derart verlangsamt werden, dass die verlangsamten Signaturen (37,42) in einem Punkt (41) gesammelt und übereinander angeordnet zum Übergabezylinder transportiert werden.

6. Rollendruckmaschine nach Anspruch 1,
**dadurch gekennzeichnet,**
**daß** vier Bandpfade (29, 31, 26,27) vorgesehen sind, in welchen die jeweils eine Signatur transportiert werden kann, und daß eine erste Ablenkstation (30) und eine zweite Ablenkstation (28) vorgesehen sind, wobei an der ersten Ablenkstation (30) die erste und die zweite Signatur in einen der Bandpfade (29) geleitet werden können und die dritte Signatur in einen anderen der Bandpfade (31) geleitet werden kann und die ersten und zweiten Signaturen an der zweiten Ablenkstation (28) in verschiedene Bandpfade (26, 27) geleitet werden können.

## Claims

1. Web-fed rotary printing machine with cutting cylinders (1) for cutting the web into signatures (6, 7, 8), having a transfer cylinder to hold the signatures, and having a signature gathering device for gathering the signatures before the latter are passed to the transfer cylinder, **characterized in that** the signature gathering device comprises the following features:
a deflection station (4), at which the signatures (2, 3) coming from the cutting cylinders can be deflected;
at least two belt paths (5, 11) of respectively different lengths which are arranged downstream of the deflection station (4) and in which the signatures (6, 8) coming from the deflection station (4) can be held; and
at least one gathering point, located between deflection station (4) and transfer cylinder, at which the signatures (9) coming from the various belt paths (5, 11) can be gathered and, arranged one above another, fed to the transfer cylinder.

2. Web-fed rotary printing machine according to Claim 1, **characterized in that** at least one of the belt paths (5, 11) has a belt roller (20) prestressed by a spring (21) for tautening the belt path.

3. Web-fed rotary printing machine according to Claim 1, **characterized in that** this further comprises: a belt roller (23) which makes contact with one of the belt paths (5, 11); a pivoting arm (24), which pivots the belt roller (23) about an axis of rotation (25); and an actuating member (22), by means of which the belt roller (23) is pivoted in order to change the length of the belt path.

4. Web-fed rotary printing machine according to Claim 1, **characterized in that** three belt paths (14, 12, 15) are provided, in which in each case a signature can be transported, and **in that** two gathering points (16, 17) are provided, two of the three signatures arranged one above another being gathered at one of the gathering points (16, 17) and it being possible at the other of the gathering points for the third signature to be gathered arranged above the two others.

5. Web-fed rotary printing machine according to Claim 1, **characterized in that** each of the belt paths (36, 38) has a braking device (40, 39) by means of which the signatures (34, 35) in the belt path (36, 38) can be decelerated in such a way that the decelerated signatures (37, 42) are gathered at a point (41) and, arranged one above another, are transported to the transfer cylinder.

6. Web-fed rotary printing machine according to Claim 1, **characterized in that** four belt paths (29, 31, 26, 27) are provided, in which in each case a signature can be transported, and **in that** a first deflection station (30) and a second deflection station (28) are provided, it being possible for the first and the second signature to be led into one of the belt paths (29) at the first deflection station (30), and for the third signature to be led into another of the belt paths (31), and for the first and second signatures to be guided into different belt paths (26, 27) at the second deflection station (28).

## Revendications

1. Machine à imprimer à rouleaux avec des cylindres de coupe (1) pour la découpe de la bande en signatures (6, 7, 8), avec un cylindre de transfert pour recevoir les signatures et avec un dispositif de réunion de signatures pour réunir les signatures avant qu'elles n'arrivent au cylindre de transfert, **caractérisée en ce que** le dispositif de réunion de signatures comprend les éléments suivants : une station de déviation (4), dans laquelle les signatures (2, 3) provenant des cylindres de coupe peuvent être déviées, au moins deux chemins de bandes (5, 11) d'une longueur respectivement différente disposés derrière la station de déviation (4), qui peuvent recevoir les signatures (6, 8) provenant de la station de déviation (4) et au moins un point de réunion situé entre la station de déviation (4) et le cylindre de transfert où les signatures (9) provenant des différents chemins de bandes (5, 11) peuvent être réunies et être dirigées vers le cylindre de transfert en étant superposées l'une à l'autre.

2. Machine à imprimer à rouleaux selon la revendication 1, **caractérisée en ce qu'**au moins un des chemins de bandes (5, 11) comprend un tambour de bande (20) tendu par un ressort (21) et servant à mettre le chemin de bande en tension.

3. Machine à imprimer à rouleaux selon la revendication 1, **caractérisée en ce qu'**elle comprend en outre un tambour de bande (23), qui est en contact avec un des chemins de bandes (5, 11), un bras pivotant (24), qui fait pivoter le tambour de bande (23) autour d'un axe de rotation (25), et un élément d'actionnement (22), qui sert à pivoter le tambour de bande (23) pour modifier la longueur du chemin de bande.

4. Machine à imprimer à rouleaux selon la revendication 1, **caractérisée en ce que** trois chemins de bandes (14, 12, 15), dans lesquels peut être transportée la respectivement une signature, sont prévus et **en ce que** deux points de réunion (16, 17) sont prévus, deux des trois signatures étant réunies à l'un des points de réunion (16, 17) en étant disposées l'une sur l'autre et la troisième signature pouvant être réunie à l'autre des points de réunion en étant disposée sur les deux autres.

5. Machine à imprimer à rouleaux selon la revendication 1, **caractérisée en ce que** chacun des chemins de bandes (36, 38) comprend un dispositif de freinage (40, 39), à l'aide duquel les signatures (34, 35) sont ralenties de telle manière dans les chemins de bandes (36, 38) que les signatures ralenties (37, 42) puissent être réunies en un point (41) et être transportées au cylindre de transfert en étant disposées l'une sur l'autre.

6. Machine à imprimer à rouleaux selon la revendication 1, **caractérisée en ce que** quatre chemins de bandes (29, 31, 26, 27), dans lesquels peut être transportée la respectivement une signature, sont prévus et **en ce qu'**une première station de déviation (30) et une deuxième station de déviation (28) sont prévues, la première station de déviation (30) permettant de diriger la première et la deuxième signature dans l'un des chemins de bandes (29) et la troisième signature dans un autre des chemins de bandes (31) et la deuxième station de déviation (28) permettant de diriger la première signature ainsi que la deuxième signature dans différents chemins de bandes (26, 27).
